# EUROPÄISCHE PATENTSCHRIFT

(11) **EP 4 622 865 B1**
(45) Veröffentlichungstag und Bekanntmachung des Hinweises auf die Patenterteilung: **21.01.2026**
(21) Anmeldenummer: 23817943.6
(22) Anmeldetag: 24.11.2023
(51) Int. Cl.: B64D 11/00, H01R 13/62, H01R 13/24

(54) **KABINENAUSSTATTUNGSEINHEIT UND VERFAHREN ZUM ZUSAMMENSETZEN DER KABINENAUSSTATTUNGSEINHEIT**
CABIN FITTING AND METHOD FOR ASSEMBLING THE CABIN FITTING
AMÉNAGEMENT DE CABINE ET PROCÉDÉ D'ASSEMBLAGE D'AMÉNAGEMENT DE CABINE

(30) Priorität: 25.11.2022 AT 508962022
(43) Veröffentlichungstag der Anmeldung: 01.10.2025
(73) Patentinhaber: FACC AG, 4910 Ried im Innkreis (AT)
(72) Erfinder: KAMMERER, Bernhard, 4755 Zell an der Pram (AT)
(74) Vertreter: SONN Patentanwälte GmbH & Co KG
(86) Internationale Anmeldenummer: PCT/AT2023/060410
(87) Internationale Veröffentlichungsnummer: WO 2024/108247

(56) Entgegenhaltungen:
- EP-A1- 2 533 374
- EP-B1- 1 537 632
- DE-U1- 202012 006 523
- US-A1- 2012 038 253
- US-B1- 10 711 500
- US-B2- 10 407 172
- US-B2- 9 531 118

## Beschreibung

Die Erfindung betrifft eine Kabinenausstattungseinheit für eine Passagierkabine eines Luftfahrzeugs, insbesondere ein Überkopf-Gepäckfach, wobei die Kabinenausstattungseinheit folgendes aufweist:
- ein erstes Schwenkteil, insbesondere ein erstes Gepäckfachteil,
- ein zweites Schwenkteil, das gegenüber dem ersten Schwenkteil um eine Schwenkachse zwischen einer Offenstellung und einer Schließstellung verschwenkbar ist, insbesondere ein zweites Gepäckfachteil, und
- ein elektrisches Element, das an dem zweiten Schwenkteil angeordnet ist und über eine elektrische Verbindungsleitung mit dem ersten Schwenkteil verbindbar ist.

Des Weiteren betrifft die Erfindung ein Luftfahrzeug, insbesondere ein Flugzeug, mit einer Passagierkabine und einer Kabinenausstattungseinheit sowie ein Verfahren zum Zusammensetzen einer Kabinenausstattungseinheit, vorzugsweise in einem Luftfahrzeug, insbesondere in einem Flugzeug.

In der Luftfahrtbranche wird das Ziel verfolgt, den vorhandenen Platz möglichst effizient zu nutzen, wodurch allerdings die Komplexität der Bauteile erhöht und deren Installation erschwert wird. Dies ist auch bei Kabinenausstattungseinheiten, wie Überkopf-Gepäckfächern, der Fall. Bei diesen kommt hinzu, dass Bestandteile wie Gelenke, Scharniere und elektrische Leitungen aus Schutz- und Sicherheitsgründen an verdeckten und daher schwer zugänglichen Stellen angeordnet sind, um Abnutzungen und Beschädigungen durch Be- und Entladungen von Gepäckstücken zu vermeiden. Bei zueinander verschwenkbaren Gepäckfachteilen werden elektrische Verbindungsleitungen deshalb beispielsweise durch die Schwenkachsen geführt und in Kabelkanälen untergebracht. Dies ist zum Beispiel in der DE 10 2007 030 331 A1 oder der US 10,407,172 B2 gezeigt. Durch die genannten Maßnahmen, die der Sicherheit und Platzeinsparung dienen, wird der Installationsaufwand von Kabinenausstattungseinheiten in der Flugzeugkabine erhöht. Es ist daher im Allgemeinen wünschenswert, die Installation von Kabinenausstattungseinheiten in Flugzeugen zu vereinfachen, ohne den Platzbedarf zu erhöhen oder die Sicherheit zu beeinträchtigen.

Aus dem Stand der Technik sind magnetische Kopplungseinrichtungen bekannt, mit denen mithilfe von Magneten eine lösbare elektrische Verbindung zwischen elektrischen Kontakten hergestellt werden kann. Wenn die Kopplungsteile eng genug zueinander beabstandet sind, werden diese durch die Magnetkraft verbunden. Derartige Kupplungen sind aus US 9,531,118 B2, EP 2 533 374 A1, EP 1 537 632 B1 und DE 20 2012 006 523 U1 bekannt. Die bekannten magnetischen Kopplungseinrichtungen sind jedoch nicht für den Einsatz in beengten Platzverhältnissen, wie sie in Kabinenausstattungseinheiten für Flugzeuge wie beispielsweise Überkopf-Gepäckfächer vorherrschen, geeignet. Insbesondere an Stellen, die mit der Hand nicht erreichbar sind, können die Kopplungseinrichtungen nicht eingesetzt werden.

Gepäckfächer sind beispielsweise aus US 2012/0038253 A1, US 10,711,500 B1 und US 10,407,172 B2 bekannt.

Im Lichte der obigen Ausführungen ist es Aufgabe der vorliegenden Erfindung, die Nachteile des Standes der Technik zu beseitigen oder gar gänzlich zu vermeiden. Vorzugsweise ist es Aufgabe der vorliegenden Erfindung, bei einer Kabinenausstattungseinheit der eingangs erwähnten Art die Herstellung einer elektrischen Verbindung zwischen dem ersten und dem zweiten Schwenkteil zu erleichtern.

Gelöst wird diese Aufgabe durch eine Kabinenausstattungseinheit nach Anspruch 1, ein Luftfahrzeug nach Anspruch 12 sowie ein Verfahren zum Zusammensetzen einer Kabinenausstattungseinheit nach Anspruch 13.

Erfindungsgemäß ist bei einer Kabinenausstattungseinheit der eingangs erwähnten Art vorgesehen, dass das erste Schwenkteil ein erstes Kontaktverbindungselement und die elektrische Verbindungsleitung ein zum ersten Kontaktverbindungselement korrespondierendes zweites Kontaktverbindungselement aufweist, wobei das erste und/oder das zweite Kontaktverbindungselement zumindest einen Magneten aufweist und die Kontaktverbindungselemente von einer Trennstellung in eine Kontaktstellung überführbar sind, in der die Kontaktverbindungselemente elektrisch miteinander verbunden sind, wobei das zweite Kontaktverbindungselement derart am zweiten Schwenkteil anordenbar sind, dass durch Überführen des zweiten Schwenkteils in die Schließstellung die Kontaktverbindungselemente in die Kontaktstellung gebracht und insbesondere durch eine Magnetkraft des zumindest einen Magneten in der Kontaktstellung gehalten werden.

Dadurch kann vorteilhafterweise eine elektrische Verbindung zwischen dem ersten Schwenkteil und dem zweiten Schwenkteil an einer schwer zugänglichen Stelle beim erstmaligen Zusammenbau oder nach einer Reparatur der Kabinenausstattungseinheit hergestellt werden. Somit kann auch bei komplexen Kabinenausstattungseinheiten der Installationsaufwand gering gehalten werden. Andererseits können elektrische Verbindungen bewusst an schwer zugänglichen Stellen platziert werden, um Beschädigung, beispielsweise durch Beladung von Gepäckstücken, zu vermeiden und um den Reparaturbedarf gering zu halten. Die Kabinenausstattungseinheit kann insbesondere bei einer Passagierkabine eines Flugzeugs eingesetzt werden. Bevorzugt ist die Kabinenausstattungseinheit als ein Überkopf-Gepäckfach ausgebildet, das oberhalb von Sitzen in einem Flugzeug montiert ist. Die Kabinenausstattungseinheit kann aber auch ein Sessel, ein Schrank, ein Regal oder eine Innenverkleidung sein. Wichtig ist nur, dass zwei Schwenkteile vorgesehen sind. Das erste Schwenkteil kann im Falle eines Überkopf-Gepäckfaches als erstes Gepäckfachteil ausgebildet sein. Das erste Gepäckfachteil ist typischerweise statisch, d.h. relativ zum Flugzeugrumpf unbeweglich und bildet meist die Oberseite des Überkopf-Gepäckfaches. Das zweite Gepäckfachteil ist gegenüber dem ersten Gepäckfachteil bevorzugt nach unten hin verschwenkbar. Die Kabinenausstattungseinheit weist bevorzugt einen Stauraum für Gegenstände, insbesondere Gepäckstücke, auf, der in der Offenstellung beladen werden kann. In der Schließstellung sind die Schwenkteile vorzugsweise relativ zueinander fixiert, sodass deren Stellung zueinander erhalten bleibt. Bei einer Ausführungsform der Erfindung können die Schwenkteile in der Schließstellung verriegelt werden. Nach Betätigen eines Betätigungselements, beispielsweise eines Griffes, kann das zweite Schwenkteil in die Offenstellung überführt werden. Bei dem elektrischen Element handelt es sich um ein Element, das über die elektrische Verbindungsleitung mit elektrischem Strom versorgt werden soll. Die Verbindungsleitung kann auch Signale, insbesondere Datensignale, übertragen. Die Verbindungsleitung ist bevorzugt ein elektrisches Kabel, das isoliert ist. Das Kabel weist zumindest zwei voneinander isolierte Adern, vorzugsweise zumindest drei oder zumindest vier Adern, auf. Beispielsweise kann die Verbindungsleitung zwei Adern für die Energieversorgung und zumindest eine oder mehrere Adern für (Daten-)Signale aufweisen. Das elektrische Element kann ein elektrisches Leuchtelement, ein elektrischer Motor, ein Monitor oder ein Bedienfeld sein. Erfindungsgemäß weist das erste Schwenkteil ein erstes Kontaktverbindungselement und das die elektrische Verbindungsleitung ein zum ersten Kontaktverbindungselement korrespondierendes zweites Kontaktverbindungselement auf. Korrespondierend bedeutet, dass die Kontaktelemente miteinander verbunden werden können. Über die Kontaktverbindungselemente kann eine elektrische Verbindung zwischen dem elektrischen Element und dem ersten Schwenkteil hergestellt werden. Zu diesem Zweck können die Kontaktverbindungselemente jeweils zueinander korrespondierende Kontakte, beispielsweise Kontaktstifte und/oder Kontaktbuchsen, aufweisen. Die Kontakte, insbesondere Kontaktstifte, können mit Hilfe von mechanischen Federn federvorgespannt sein, um die elektrische Kontaktierung zu erleichtern. Die Kontaktbuchsen können ebenfalls federvorgespannt sein und/oder federnde Seitenwände aufweisen, um Kontaktstifte lösbar zu fixieren. Bevorzugt weist das erste und das zweite Kontaktverbindungselement jeweils zumindest zwei, zumindest drei oder zumindest vier Kontakte auf. In der Kontaktstellung sind die Kontakte der Kontaktverbindungselemente elektrisch kontaktiert. Das erste Schwenkteil kann eine elektrische Stromversorgung aufweisen oder mit einer solchen verbunden sein. Das erste Kontaktverbindungselement kann über eine weitere Verbindungsleitung mit der Stromversorgung verbunden sein. Um die Kontaktstellung herzustellen und in einer bevorzugten Ausführungsform auch beizubehalten, weisen das erste und/oder das zweite Kontaktverbindungselement zumindest einen Magneten auf. Der Magnet kann beispielsweise ein Permanentmagnet, zum Beispiel ein Permanentmagnet mit Neodym oder einer Neodym-Eisen-Bor-Verbindung, ein Elektromagnet oder ein vormagnetisierter Werkstoff, beispielsweise vormagnetisiertes Metall, sein. Im Falle eines Permanentmagneten kann dieser beispielsweise als Stabmagnet ausgebildet sein. Durch den zumindest einen Magneten werden die Kontaktverbindungselemente angezogen, wenn die Kontaktverbindungselemente einen entsprechend geringen Abstand von beispielsweise von weniger als 2 cm zueinander haben. Wenn nur eines der Kontaktverbindungselemente einen Magneten aufweist, besteht das andere Kontaktverbindungselement zumindest teilweise aus einem magnetischen Werkstoff, insbesondere aus Metall. Selbstverständlich können auch beide Kontaktverbindungselemente entsprechend ausgerichtete und polarisierte Magnete aufweisen. Bei einer bevorzugten Ausführungsform weist das erste oder das zweite Kontaktverbindungselemente abstehende Positionierstifte auf, die in dem anderen von dem ersten oder zweiten Kontaktelement in entsprechende Aufnahmebuchsen vorzugsweise im Wesentlichen formschlüssig aufgenommen werden können. Die Positionierstifte können konisch geformt sein, um die Aufnahme in die Aufnahmebuchsen zu erleichtern. Bevorzugt ist, wenn die Positionierstifte Magneten aufweisen. Es kann aber auch vorgesehen sein, dass die Aufnahmebuchsen Magnete aufweisen und das andere Kontaktverbindungselement Positionierstifte ohne Magnete aufweist, die in die Aufnahmebuchsen aufgenommen werden können. Bevorzugt ist, wenn die Kontaktstifte mit einer geringeren Länge von dem entsprechenden Kontaktverbindungselement abstehen als die Positionierstifte, sodass mit den Positionierstiften eine Positionierung der Kontaktverbindungselemente vorgenommen werden kann, bevor die Kontaktstifte in Kontaktbuchsen eindringen. In der Trennstellung sind die Kontakte der Kontaktverbindungselemente elektrisch voneinander getrennt, sodass keine elektrische Verbindung zwischen dem elektrischen Element und dem ersten Schwenkteil vorliegt. Die Kontaktverbindungselemente können von der Kontaktstellung in die Trennstellung insbesondere durch Überwinden der Magnetkraft überführt werden. Das erste Kontaktverbindungselement kann statisch, d.h. unbeweglich am ersten Schwenkteil montiert sein, beispielsweise durch Verkleben, vernieten, verschweißen oder verschrauben. Bevorzugt ist das erste Kontaktverbindungselement an einer Innenseite der Kabinenausstattungseinheit, insbesondere an einer einen Aufnahmeraum für das zweite Schwenkteil ausbildenden oder zugewandten Innenseite des ersten Schwenkteils angeordnet. Das erste Kontaktverbindungselement kann im Wesentlichen bündig an der Innenseite des ersten Schwenkteils angeordnet sein. Das erste Kontaktverbindungselement kann auch versetzt zu der Innenseite angeordnet sein. Das zweite Kontaktverbindungselement ist derart am zweiten Schwenkteil lösbar anordenbar, dass beim Überführen des zweiten Schwenkteils in die Schließstellung die Kontaktverbindungselemente durch die Magnetkraft des zumindest einen Magneten in die Kontaktstellung gebracht werden. Zu diesem Zweck kann das zweite Kontaktverbindungselement von dem zweiten Schwenkteil werkzeuglos lösbar gehalten werden. Wenn das zweite Schwenkteil beim Überführen in die Schließstellung an das erste Schwenkteil herangeführt wird, wird auch das zweite Kontaktverbindungselement an das erste Kontaktverbindungselement herangeführt. Wenn der Abstand zwischen den Kontaktverbindungselementen gering genug ist, beispielsweise unter 2 cm, wird das zweite Kontaktverbindungselement vom ersten Kontaktverbindungselement magnetisch angezogen bzw. vice versa. Das zweite Kontaktverbindungselement ist derart am zweiten Schwenkteil angeordnet, dass es sich vom zweiten Schwenkteil lösen und mit dem ersten Kontaktverbindungselement in Kontaktstellung gehen kann. Bevorzugt sind die Kontaktverbindungselemente derart geformt, dass eine eindeutige Orientierung für die Kontaktstellung vorgegeben ist, die elektrische Fehlkontaktierungen ausschließt. Der zumindest eine Magnet kann dabei so ausgerichtet sein, dass die Kontaktelemente in der vorgegebenen Orientierung in die Kontaktstellung finden. Durch den Magnet werden die Kontaktverbindungselemente in der Kontaktstellung gehalten. Zusätzlich kann auch eine werkzeuglos lösbare mechanische Verriegelung, beispielsweise ein federndes Schnappelement, vorgesehen sein, die die Kontaktverbindungselemente in der Kontaktstellung hält. Diese Ausführungsform ist insbesondere bei der Verwendung eines Elektromagneten vorteilhaft. Die Kontaktverbindungselemente können dazu ausgebildet sein, elektrische Energie und Datensignale zu übertragen. Das erste und/oder das zweite Kontaktverbindungselement kann zumindest teilweise aus Kunststoff, beispielsweise Polyetherimid, bestehen.

In der vorliegenden Offenbarung beziehen sich Richtungs- und Ortsangaben auf den bestimmungsgemäßen Einbauzustand der Kabinenausstattungseinheit in einer Passagierkabine eines Luftfahrzeugs, insbesondere eines Flugzeugs. Bei einem nicht einschränkenden Beispiel ist der bestimmungsgemäße Einbauzustand eines Überkopf-Gepäckfachs beispielsweise jener, in dem das zweite Gepäckfachelement nach unten geschwenkt werden kann. Die Schwenkachse ist vorzugsweise im Wesentlichen parallel zur Längsachse des Luftfahrzeugs bzw. der Passagierkabine ausgerichtet.

Bevorzugt ist, wenn die Kontaktstellung zwischen dem ersten und dem zweiten Kontaktverbindungselement bei Überführen des zweiten Schwenkteils von der Schließstellung in die Offenstellung beibehalten wird. Dies kann durch den zumindest einen Magneten erreicht werden, der die Kontaktverbindungselemente voneinander lösbar in der Kontaktstellung hält. Zusätzlich kann, wie oben bereits erwähnt, eine werkzeuglos lösbare mechanische Verriegelung, beispielsweise ein federndes Schnappelement, vorgesehen sein, die die Kontaktverbindungselemente in der Kontaktstellung hält.

Bei einer besonders bevorzugten Ausführungsform der Erfindung ist vorgesehen, dass ein Positionierelement, insbesondere ein Halteelement, für das zweite Kontaktverbindungselement an dem zweiten Schwenkteil angeordnet ist, mit dem das zweite Kontaktverbindungselement beim Überführen des zweiten Schwenkteils in die Schließstellung an das erste Kontaktverbindungselement heranführbar ist. Mit Hilfe des Positionierelements kann das zweite Kontaktverbindungselement in einer Position am zweiten Schwenkteil positioniert werden, von der aus das zweite Kontaktverbindungselement bei der Überführung des zweiten Schwenkteils in die Schließstellung mithilfe des zumindest einen Magneten in die Kontaktstellung mit dem ersten Kontaktverbindungselement gebracht werden kann. Das Positionierelement ist dazu eingerichtet, das zweite Kontaktverbindungselement werkzeuglos lösbar zu halten, sodass sich das zweite Kontaktverbindungselement von dem Positionierelement lösen kann, wenn es mit dem ersten Kontaktverbindungselement in Kontaktstellung übergeht. Bei einer Ausführungsform der Erfindung kann das Positionierelement zumindest einen, insbesondere mehrere, Haltevorsprünge aufweisen, die das zweite Kontaktverbindungselement in Position halten können. Dabei kann ein Spiel, beispielsweise ein Spiel von weniger als 1 mm, zwischen dem zumindest einem Haltevorsprung und dem zweiten Kontaktverbindungselement vorgesehen sein. Das Positionierelement kann zumindest teilweise oder vollständig aus einem Kunststoff, wie zum Beispiel Polyetherimid, bestehen. Günstig ist, wenn schwer entflammbare Kunststoffe verwendet werden. Das Positionierelement kann mithilfe eines Spritzgießverfahrens hergestellt worden sein. Bevorzugt ist das Positionierelement an einer Außenseite, insbesondere an einer oberseitigen Außenseite, des zweiten Schwenkteils angeordnet.

Um die Kontaktverbindungselemente leichter in die Kontaktstellung zu bringen, ist es vorteilhaft, wenn das Positionierelement in einem Querschnitt der Kabinenausstattungseinheit betrachtet in einem im Wesentlichen gleichen Abstand von der Schwenkachse angeordnet ist wie das erste Kontaktverbindungselement. Es ist auch vorteilhaft, wenn das Positionierelement und das Kontaktverbindungselement in einem Längsschnitt der Kabinenausstattungseinheit betrachtet an einer im Wesentlichen gleichen Längsposition angeordnet sind. Dadurch wird das Positionierelement beim Überführen der Schwenkteile in die Schließstellung zielgerichtet an das erste Kontaktverbindungselement herangeführt.

Bei einer Ausführungsform der Erfindung kann das erste Schwenkteil einen Aufnahmeraum ausbilden, in welchen das zweite Schwenkteil in der Schließstellung zumindest teilweise aufgenommen ist, wobei das erste Kontaktverbindungselement an einer den Aufnahmeraum ausbildenden Innenseite des ersten Schwenkteils angeordnet ist. Diese Ausführungsform der Erfindung ist insbesondere für Überkopf-Gepäckfächer von Vorteil, da dadurch eine elektrische Verbindung der beiden Schwenkteile an einer schwer zugänglichen Stelle hergestellt werden kann. Durch die Anordnung der elektrischen Verbindung an einer schwer zugänglichen Stelle ist die elektrische Verbindung vor Beschädigungen geschützt. Außerdem wird dadurch die Sicherheit für Personen erhöht.

Bei der vorgenannten Ausführungsform ist es wie bereits erwähnt zusätzlich vorteilhaft, wenn das Positionierelement an einer dem Aufnahmeraum zugewandten Außenseite, insbesondere oberseitigen Außenseite, des zweiten Schwenkteils angeordnet ist. Dadurch kann durch Überführen des zweiten Schwenkteils in die Schließstellung eine elektrische Verbindung zwischen dem elektrischen Element und dem ersten Schwenkteil an einer schwer zugänglichen aber geschützten Stelle hergestellt werden.

Die Verbindungsleitung kann zumindest teilweise in einem Teilbereich des Aufnahmeraums angeordnet sein. Bevorzugt befindet sich der Teilbereich zwischen der oberseitigen Außenseite des zweiten Schwenkteils und der dem Aufnahmeraum zugewandten Innenseite des ersten Schwenkteils.

Hinsichtlich Platzeinsparungen ist vorteilhaft, wenn die Verbindungsleitung ein Flachbandkabel, insbesondere ein zumindest vierpoliges Flachbandkabel, ist. Das Flachbandkabel kann eine Länge von beispielsweise zumindest 4 cm aufweisen. Die einzelnen Adern des Kabels sind voneinander elektrisch isoliert.

Bei einer Ausführungsform der Erfindung ist das elektrische Element ein Beleuchtungselement, insbesondere ein in einer Griffleiste des zweiten Schwenkteils angeordnetes Beleuchtungselement. Die elektrische Verbindung des elektrischen Elements mit dem ersten Schwenkteil kann mit der elektrischen Verbindungsleitung erfolgen. Das elektrische Element kann aber auch ein Monitor, ein elektrischer Motor oder ein Bedienelement sein.

Um die Herstellung einer elektrischen Verbindung zu erleichtern, ist es vorteilhaft, wenn das erste und/oder das zweite Kontaktverbindungselement zumindest einen federnden Kontaktstift aufweist. Der zumindest eine federnde Kontaktstift kann federvorgespannt sein. Ein Kontaktstift am ersten oder zweiten Kontaktverbindungselement kann in eine Kontaktbuchse am anderen vom ersten oder zweiten Kontaktverbindungselement aufgenommen werden. Auch die Kontaktbuchse kann federnd ausgebildet sein. Vorzugsweise sind Seitenwände der Kontaktbuchsen federnd ausgebildet. Bevorzugt weist das erste/zweite Kontaktverbindungselement ausschließlich Kontaktstifte auf, während das zweite/erste Kontaktverbindungselement ausschließlich Kontaktbuchsen aufweist, die jeweils einen Kontaktstift aufnehmen können. Bevorzugt ist, wenn die Kontaktstifte und Kontaktbuchsen derart angeordnet sind, dass sich ausschließlich eine einzige Orientierung der Kontaktverbindungselemente ergibt, in der die Kontaktverbindungselemente in die Kontaktstellung gebracht werden können.

Um beim Deinstallieren der Kabinenausstattungseinheit ein unbeabsichtigtes Ziehen an der Verbindungsleitung zu verhindern, kann ein Sicherungselement vorgesehen sein, das mit dem zweiten Kontaktverbindungselement und dem zweiten Schwenkteil verbunden ist. Das Sicherungselement kann beispielsweise als Draht, Kabel, Schnur oder Kette ausgebildet sein. Das Sicherungselement ist bevorzugt derart von der Länge bemessen, dass bei einer Demontage des zweiten Schwenkteils das zweite Kontaktverbindungselement ohne Belastung der Verbindungsleitung vom ersten Kontaktverbindungselement gezogen wird, sodass die Kontaktverbindungselemente durch das Sicherungselement in die Trennstellung überführt werden. Dadurch wird die Verbindungsleitung nicht belastet. Beispielsweise kann vorgesehen sein, dass das Sicherungselement kürzer bemessen ist als der Abschnitt der Verbindungsleitung, die sich im Teilbereich des Aufnahmeraums zwischen dem ersten und dem zweiten Schwenkteil befindet. Das Sicherungselement kann am zweiten Schwenkteil, beispielsweise an dem Positionierelement oder einer Halterung, insbesondere einem Hakenelement, befestigt sein.

Die eingangs erwähnte Aufgabe wird auch durch ein Luftfahrzeug, insbesondere ein Flugzeug, nach Anspruch 12 gelöst. Das erfindungsgemäße Luftfahrzeug weist zumindest eine Kabinenausstattungseinheit der oben beschriebenen Art auf. Die Kabinenausstattungseinheit ist in der Passagierkabine angeordnet. Bevorzugt befinden sich in der Passagierkabine mehrere Kabinenausstattungseinheiten.

Die eingangs erwähnte Aufgabe wird auch durch ein Verfahren zum Zusammensetzen einer Kabinenausstattungseinheit, vorzugsweise in einem Luftfahrzeug, insbesondere in einem Flugzeug, nach Anspruch 13 gelöst. Das Verfahren weist folgende Schritte auf:
Bereitstellen einer Kabinenausstattungseinheit, das folgendes aufweist:
   - ein erstes Schwenkteil, insbesondere ein erstes Gepäckfachteil, mit einem ersten Kontaktverbindungselement;
   - ein zweites Schwenkteil, das gegenüber dem ersten Schwenkteil um eine Schwenkachse verschwenkbar ist, insbesondere ein zweites Gepäckfachteil;
   - ein elektrisches Element, das an dem zweiten Schwenkteil angeordnet ist und über eine elektrische Verbindungsleitung mit dem ersten Schwenkteil verbindbar ist, wobei die elektrische Verbindungsleitung ein zum ersten Kontaktverbindungselement korrespondierendes zweites Kontaktverbindungselement aufweist und das zweite Kontaktverbindungselement am zweiten Schwenkteil lösbar angeordnet ist;
   - zumindest einen Magneten an dem ersten und/oder zweiten Kontaktverbindungselement, wobei die Kontaktverbindungselemente von einer Trennstellung in eine Kontaktstellung überführbar sind, in der die Kontaktverbindungselemente elektrisch miteinander verbunden sind;
Überführen des zweiten Schwenkteils in eine Schließstellung, sodass die Kontaktverbindungselemente in die Kontaktstellung gebracht und anschließend insbesondere durch eine Magnetkraft des zumindest einen Magneten in der Kontaktstellung gehalten werden.

Das Verfahren ist demnach dazu geeignet, eine Kabinenausstattungseinheit der oben beschriebenen Art zusammenzusetzen. Die Vorteile und Merkmale, die in Zusammenhang mit der Kabinenausstattungseinheit beschrieben wurden, sind daher auf das Verfahren übertragbar. Vorteilhafterweise kann durch das erfindungsgemäße Verfahren auf einfache Weise eine elektrische Verbindung zwischen dem elektrischen Element und dem ersten Schwenkteil an einer schwer zugänglichen, aber dafür geschützten Stelle hergestellt werden. Bei der Deinstallation der Kabinenausstattungseinheit, beispielsweise im Rahmen von Austausch- oder Reparaturarbeiten, kann die elektrische Verbindung durch Überwinden der Magnetkraft und dadurch Überführen der Kontaktverbindungselemente in die Trennstellung wieder gelöst werden.

Bei einer Ausführungsform der Erfindung ist vorgesehen, dass vor dem Überführen des zweiten Schwenkteils in die Schließstellung das zweite Schwenkteil mit dem ersten Schwenkteil verbunden wird und das zweite Kontaktverbindungselement an dem zweiten Schwenkteil lösbar angeordnet wird. Das zweite Kontaktverbindungselement kann zu diesem Zweck in das Positionierelement eingesetzt werden.

Die Erfindung wird im Folgenden anhand von Figuren beschrieben, auf die sie jedoch nicht beschränkt sein soll. Es zeigen:
Fig. 1 eine Kabinenausstattungseinheit für eine Passagierkabine in einer Schließstellung;
Fig. 2 eine Kabinenausstattungseinheit für eine Passagierkabine in einer Offenstellung;
Fig. 3A-C einen Bewegungsablauf einer Kabinenausstattungseinheit von einer Schließstellung in eine Offenstellung.
Fig. 4A einen Ausschnitt eines Querschnitts einer Kabinenausstattungseinheit für eine Passagierkabine, bei der Kontaktelemente in einer Trennstellung vorliegen;
Fig. 4B einen Ausschnitt eines Querschnitts der Kabinenausstattungseinheit gemäß Fig. 4A, bei der die Kontaktelemente in einer Kontaktstellung vorliegen;
Fig. 5 einen Ausschnitt eines Querschnitts einer Kabinenausstattungseinheit für eine Passagierkabine, bei der Kontaktelemente in einer Trennstellung vorliegen;
Fig. 6 ein erstes Kontaktverbindungselement;
Fig. 7 ein zweites Kontaktverbindungselement in einem Positionierelement;
Fig. 8 ein Positionierelement in einer Schrägansicht und im Querschnitt;
Fig. 9 ein erstes und ein zweites Kontaktverbindungselement in Kontaktstellung im Querschnitt;
Fig. 10 ein zweites Kontaktverbindungselement in einem Positionierelement in Draufsicht; und
Fig. 11 ein zweites Kontaktverbindungselement mit einem Sicherungselement.

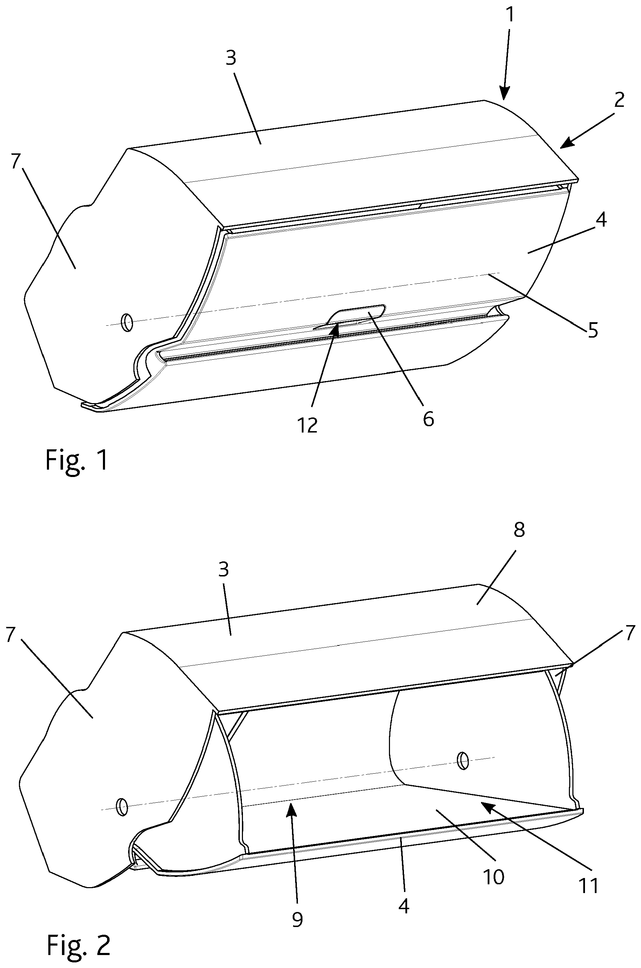

Fig. 1 zeigt eine Kabinenausstattungseinheit 1 für eine Passagierkabine eines Flugzeugs(nicht gezeigt) in einer Schließstellung, die in der gezeigten Ausführungsform als Überkopf-Gepäckfach 2 ausgebildet ist. Die Kabinenausstattungseinheit 1 weist ein erstes Schwenkteil 3 sowie ein zweites Schwenkteil 4 auf, das gegenüber dem ersten Schwenkteil 3 um eine Schwenkachse 5 verschwenkbar ist. Nach Betätigen des Griffes 6 kann die Kabinenausstattungseinheit 1 von der Schließstellung in eine Offenstellung (siehe Fig. 2) überführt werden, in der die Kabinenausstattungseinheit 1 beispielsweise mit Gepäckstücken (nicht dargestellt) beladen werden kann. Im bestimmungsgemäßen Einbauzustand kann die Kabinenausstattungseinheit 1 mithilfe von nicht dargestellten Befestigungseinrichtungen in einem Flugzeug insbesondere oberhalb von Passagiersitzen angeordnet werden.

Wie in Fig. 2 dargestellt besitzt das erste Schwenkteil 3 zwei gegenüberliegende Seitenflächen 7 sowie eine obere Deckfläche 8. Zwischen den Seitenflächen 7 und der Deckfläche 8 bildet das erste Schwenkteil 3 einen Aufnahmeraum 9 aus, in dem das zweite Schwenkteil 4 zumindest teilweise aufgenommen ist. Das zweite Schwenkteil 4 ist in der gezeigten Darstellung als Schütte 10 ausgebildet, die einen Stauraum 11 für Gepäckstücke (nicht dargestellt) aufweist. Durch Hochschwenken des zweiten Schwenkteils 4 um die Schwenkachse 5 kann die Kabinenausstattungseinheit 1 in die Schließstellung (siehe Fig. 1) überführt werden, in der die Gepäckstücke aufbewahrt werden können. In der Schließstellung wird die Kabinenausstattungseinheit 1 durch eine nicht näher dargestellte Verriegelung gehalten. Die Verriegelung kann mithilfe des Griffes 6 gelöst werden, um die Kabinenausstattungseinheit 1 wieder von der Schließstellung in die Offenstellung zu überführen.

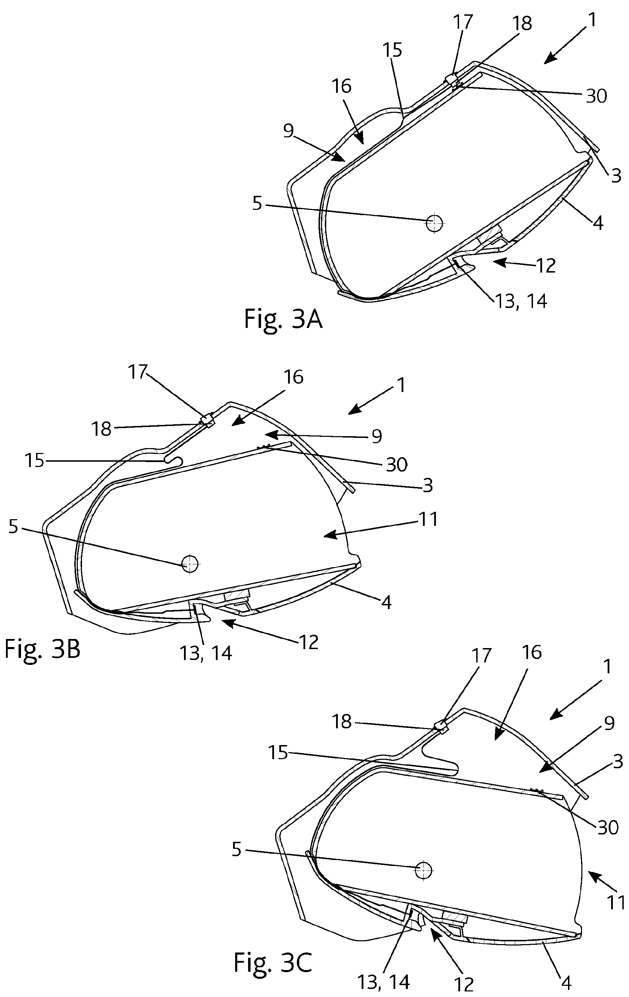

Fig. 3A-C zeigen das Überführen der Kabinenausstattungseinheit 1 von der Schließstellung in die Offenstellung in einer Querschnittsdarstellung. Wie insbesondere in Fig. 3A-C erkennbar ist, ist in einer Vertiefung 12 des zweiten Schwenkteils 4, in der auch der Griff 6 aufgenommen ist, ein elektrisches Element 13 in Form eines Beleuchtungselements 14 vorgesehen. Das Beleuchtungselement kann ein oder mehrere Leuchtelemente wie LEDs aufweisen. Die Vertiefung 12 und der Griff 6 können auch als Griffleiste bezeichnet werden. Selbstverständlich können sich auch weitere oder andere elektrische Elemente 13, wie Bedienfelder, Elektromotoren oder Bildschirme, an dem zweiten Schwenkteil 4 befinden. Um das elektrische Element 13 mit elektrischer Energie zu versorgen, ist eine elektrische Verbindungsleitung 15 vorgesehen, die das elektrische Element 13 elektrisch mit dem ersten Schwenkteil 3 verbindet. Die Verbindungsleitung 15 kann auch Datensignale übertragen. Beispielsweise können zwei Pole der Verbindungsleitung für die Energieversorgung und zumindest ein oder mehrere Pole für die Datenübertragung vorgesehen sein. Die Verbindungsleitung 15 kann ein Flachbandkabel sein. Um Beschädigungen der ersten Verbindungsleitung 15 durch Beladen der Kabinenausstattungseinheit 1 mit Gepäckstücken zu vermeiden, ist die elektrische Verbindungsleitung 15 zumindest teilweise in einem Zwischenraum 16, der einen Teilbereich des Aufnahmeraums 9 bildet, angeordnet. Die elektrische Verbindungsleitung 15 verläuft in der gezeigten Darstellung teilweise innerhalb des zweiten Schwenkteils 4 und schließlich über den Zwischenraum 16 zu dem ersten Schwenkteil 3. Dies ist sowohl in der Schließstellung, als auch in der Offenstellung der Fall.

Die Anordnung der Verbindungsleitung 15 in dem Zwischenraum 16 bietet den Vorteil, dass einerseits Beschädigungen der Verbindungsleitung 15 vermieden werden können und andererseits der Aufbau der Kabinenausstattungseinheit 1 vereinfacht wird, da die Verbindungsleitung 15 beispielsweise nicht durch die Schwenkachse 5 geführt werden muss. Nachteiligerweise ist jedoch der Zwischenraum 16 bei der Montage bzw. Installation nur schwer zugänglich wie insbesondere an den Darstellungen der Fig. 3A-Cersichtlich ist.

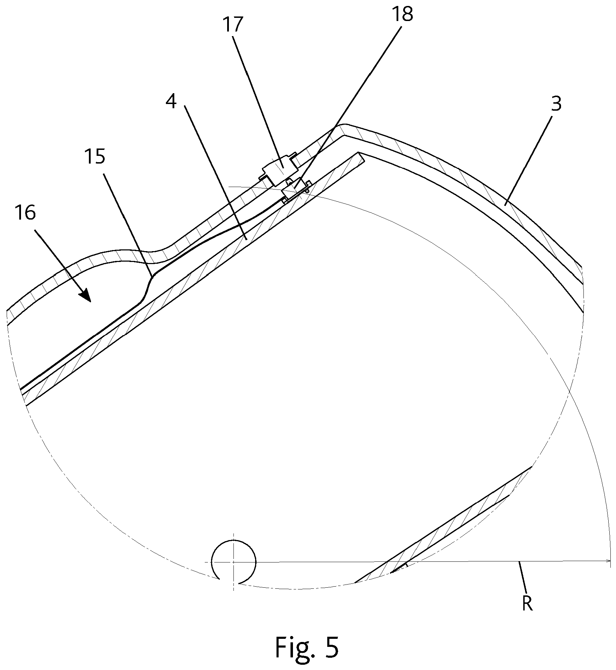

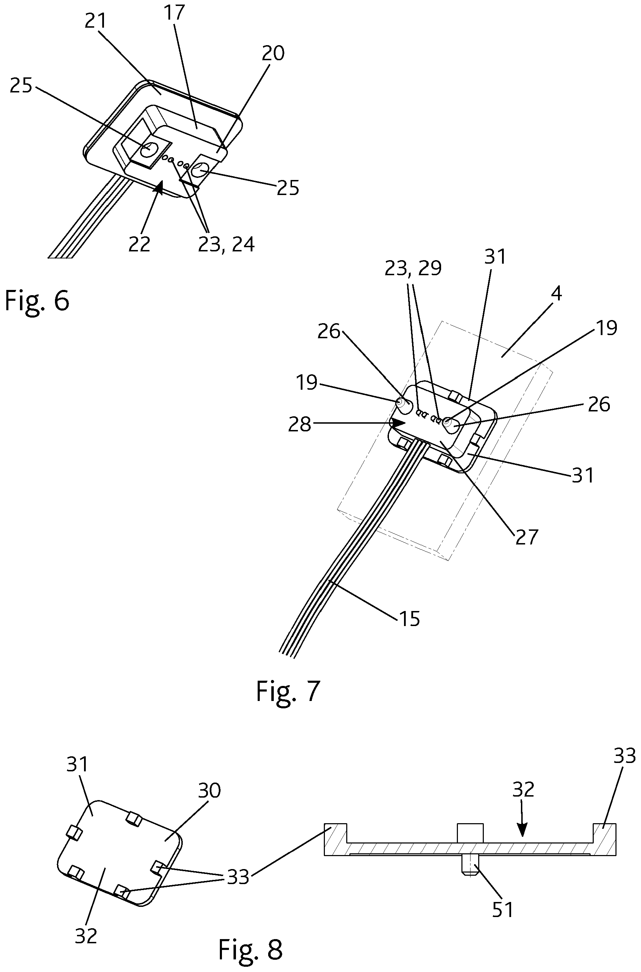

Erfindungsgemäß sind daher ein erstes Kontaktverbindungselement 17 an dem ersten Schwenkteil 3 und ein zweites Kontaktverbindungselement 18 an einem Ende der Verbindungsleitung 15 vorgesehen. Das erste 17 und das zweite Kontaktverbindungselement 18 können von einer Trennstellung, in der die Kontaktverbindungselemente 17, 18 weder elektrisch noch mechanisch miteinander verbunden sind, in eine Kontaktstellung, in der die Kontaktverbindungselemente 17, 18 elektrisch miteinander verbunden sind, überführt werden. Um die Kontaktverbindungselemente 17, 18 leichter miteinander zu verbinden bzw. in Kontaktstellung zu bringen, kann zumindest ein Magnet 19 (siehe Fig. 7), insbesondere ein Permanentmagnet, vorgesehen sein. Damit die Montage der Kabinenausstattungseinheit 1 erleichtert wird, ist beim Einbau vorgesehen, dass das zweite Kontaktverbindungselement 18 derart am zweiten Schwenkteil 4 angeordnet ist, dass durch Überführen des zweiten Schwenkteils 4 in die Schließstellung die Kontaktverbindungselemente 17, 18 in die Kontaktstellung gebracht werden. Durch das Überführen des zweiten Schwenkteils in die Schließstellung, wird das zweite Kontaktverbindungselement 18 in die Nähe des ersten Kontaktverbindungselements 17 gebracht. Dabei werden die Kontaktverbindungselemente 17, 18 durch die Magnetkraft des zumindest einen Magneten 19 angezogen und in Kontaktstellung gebracht und in dieser gehalten. Das zweite Kontaktverbindungselement 18 wird derart platziert, dass eine Anziehung durch den Magneten 19 ermöglicht wird, wenn das zweite Schwenkteil 4 in die Schließstellung überführt wird. Das erste Kontaktverbindungselement 17 ist in den gezeigten Darstellungen an einer dem Aufnahmeraum 9 zugewandten Innenseite des ersten Schwenkteils 3 angeordnet. Das zweite Kontaktverbindungselement 18 ist an einer dem Aufnahmeraum 9 zugewandten oberseitigen Außenseite des zweiten Schwenkteils 4 angeordnet. Bevorzugt ist, wenn das zweite Kontaktverbindungselement 18 vor Überführung in die Kontaktstellung in einem Querschnitt der Kabinenausstattungseinheit 1 betrachtet in einem im Wesentlichen gleichen Abstand R (siehe Fig. 5) von der Schwenkachse 5 angeordnet ist wie das erste Kontaktverbindungselement 17.

Fig. 3A zeigt das zweite Schwenkteil 4 in der Schließstellung, wodurch die Kontaktverbindungselemente 17, 18 in die Kontaktstellung gebracht wurden. Auch wenn das zweite Schwenkteil 4 in die Offenstellung überführt wird, bleiben die Kontaktverbindungselemente 17, 18 in Kontaktstellung, wie in den Fig. 3B und Fig. 3C ersichtlich ist.

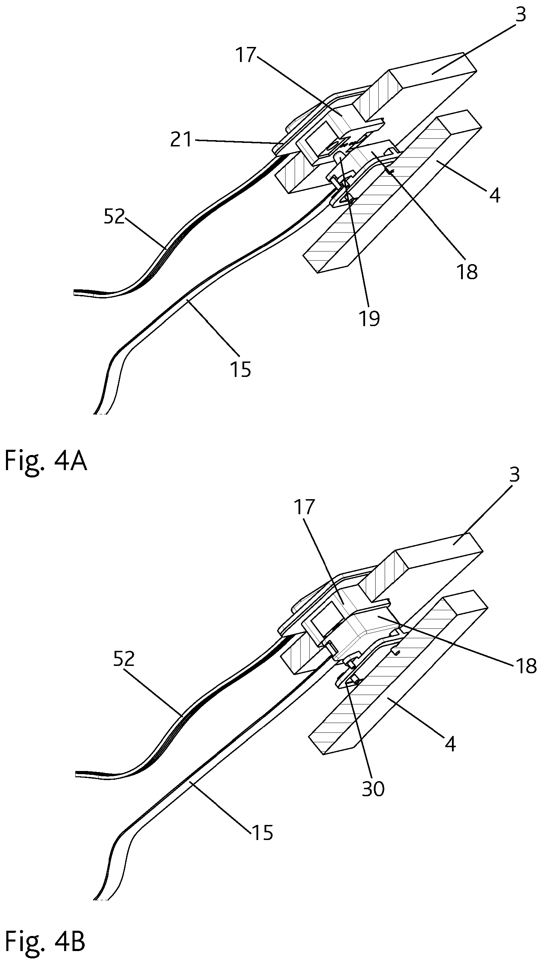

Fig. 4A zeigt einen Ausschnitt eines Querschnitts der Kabinenausstattungseinheit 1, bei dem sich das zweite Schwenkteil 4 bereits in der Schließstellung befindet, aber die Kontaktverbindungselemente 17, 18 gerade noch in der Trennstellung vorliegen.

Durch die Magnetkraft des zumindest einen Magneten 19 wird das zweite Kontaktverbindungselement 18 von seiner Position am zweiten Schwenkteil 4 abgelöst und in Richtung des ersten Kontaktverbindungselement 17 gezogen und die beiden Kontaktverbindungselemente automatisch in Kontaktstellung gebracht (siehe Fig. 4B). Durch den zumindest einen Magneten 19 werden die Kontaktverbindungselemente 17, 18 in der Kontaktstellung gehalten. Die Kontaktverbindungselemente können durch Überwindung der Magnetkraft, beispielsweise bei der Demontage im Rahmen von Reparaturarbeiten, wieder in die Trennstellung überführt werden. Im bestimmungsgemäßen Einsatz in einem Flugzeug bleibt die Kontaktstellung jedoch aufrecht, auch wenn das zweite Schwenkteil 4 von der Schließstellung in die Offenstellung überführt wird.

Fig. 5 zeigt einen vergrößerten Ausschnitt des Querschnitts gemäß Fig. 4A, bei dem sich das zweite Schwenkteil 4 in der Schließstellung befindet, das zweite Kontaktverbindungselement 18 allerdings gerade noch nicht durch die Magnetkraft des Magneten 19 in Richtung des ersten Kontaktverbindungselements 17 gezogen wurde.

Fig. 6 zeigt ein erstes Kontaktverbindungselement 17 in vergrößerter Darstellung. Das erste Kontaktverbindungselement 17 besitzt einen ersten Grundkörper 20, der bevorzugt im Wesentlichen quaderförmig ausgebildet ist. An einer Rückseite des ersten Grundkörpers 20 ist ein vorzugsweise umlaufender Halteflansch 21 vorgesehen, der den Einbau in das erste Schwenkteil 4 vereinfacht. An einer Vorderseite 22 des ersten Grundkörpers 20 weist das erste Kontaktverbindungselement 17 mehrere Kontakte 23 in Form von Kontaktbuchsen 24 auf. Die Kontaktbuchsen 24 sind dazu eingerichtet, Kontaktstifte 29 des zweiten Kontaktverbindungselements 18 aufzunehmen. Die Kontakte 23 sind entlang einer Geraden angeordnet, können aber auch auf andere Weise positioniert sein. Der erste Grundkörper 20 weist zwei Aufnahmebuchsen 25 auf, die in der gezeigten Darstellung in der Nähe der Schmalseiten des ersten Grundkörpers 20 angeordnet sind. Die Aufnahmebuchsen 25 sind dazu eingerichtet, jeweils einen abstehenden Positionierstift 26 des zweiten Kontaktverbindungselements 18 aufzunehmen. In den Aufnahmebuchsen 25 kann zumindest ein Magnet 19 vorgesehen sein. Vom ersten Kontaktverbindungselement 17 führt eine weitere Verbindungsleitung 52 zu einer Stromversorgung (nicht gezeigt).

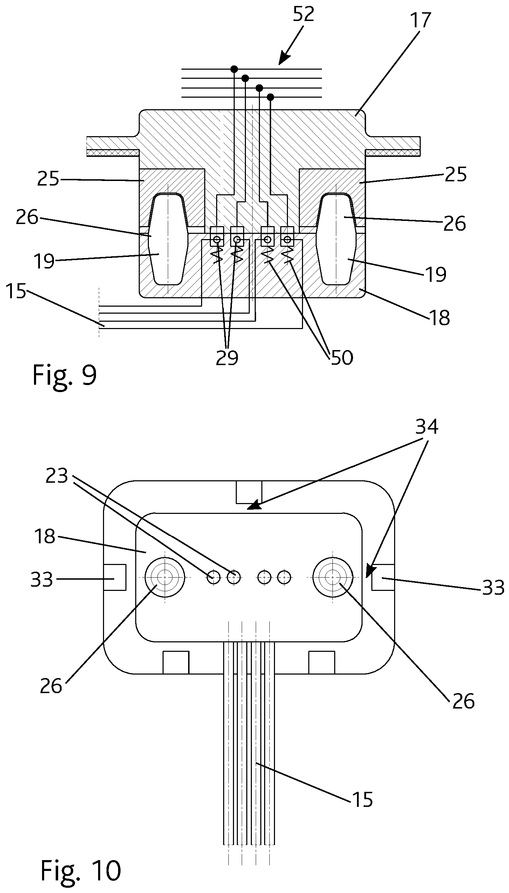

Fig. 7 zeigt ein zweites Kontaktverbindungselement 18 in vergrößerter Darstellung. Das zweite Kontaktverbindungselement 18 besitzt einen zweiten Grundkörper 27, der bevorzugt im Wesentlichen quaderförmig ausgebildet ist. An einer Vorderseite 28 des zweiten Grundkörpers 27 weist das erste Kontaktverbindungselement 17 mehrere Kontakte 23 in Form von Kontaktstiften 29 auf. Die Kontaktstifte 29 können in die Kontaktbuchsen 24 aufgenommen werden. Die Kontaktbuchsen 24 sind in der gezeigten Ausführungsform ebenfalls entlang einer Geraden angeordnet, können aber auch anders angeordnet sein. Wichtig ist nur, dass das Muster der Anordnung der Kontaktstifte 29 dem Muster der Anordnung der Kontaktbuchsen 24 entspricht. Die Kontaktstifte 29 können mit Hilfe von Federn 50 (siehe Fig. 9) federvorgespannt sein, um die elektrische Kontaktierung zu verbessern. Die Kontakte 23 sind entlang einer Geraden angeordnet, können aber auch auf andere Weise positioniert sein. Die Verbindungsleitung 15 führt in den zweiten Grundkörper 27 und ist dort mit den Kontakten 23 verbunden. Der zweite Grundkörper 27 weist zwei abstehende Positionierstifte 26 auf, die in der gezeigten Darstellung in der Nähe der Schmalseiten des zweiten Grundkörpers 27 angeordnet sind. Die Positionierstifte 26 können bei einer Ausführungsform mit einer Länge zwischen 0,5 und 5 mm von der Oberfläche des zweiten Grundkörpers 27 abstehen. Bevorzugt ist, wenn die Kontaktstifte 29 mit einer geringeren Länge von der Oberfläche des zweiten Grundkörpers 27 abstehen als die Positionierstifte 26. Die Kontaktstifte 29 können federvorgespannt sein (siehe unten), wobei der Federweg jedes Kontaktstiftes 29 beispielsweise zwischen 0,1 mm und 4 mm betragen kann. Dadurch kann eine Positionierung der Kontaktverbindungselemente 17, 18 vorgenommen werden, bevor die Kontaktstifte 29 in die Kontaktbuchsen 24 aufgenommen werden. Die Positionierstifte 26 können in die Aufnahmebuchsen 25 aufgenommen werden. Die Positionierstifte 26 können zumindest einen Magneten 19 aufweisen.

Es sei an dieser Stelle angemerkt, dass die Ausgestaltung des ersten 17 und des zweiten Kontaktverbindungselements 18 auch vertauscht sein kann. Beispielsweise kann auch das erste Kontaktverbindungselement 17 abstehende Positionierstifte 26 und/oder Kontaktstifte 29 aufweisen und das zweite Kontaktverbindungselement 18 kann auch Kontaktbuchsen 24 und/oder Aufnahmebuchsen 25 aufweisen.

In Fig. 7 ist erkennbar, dass das zweite Kontaktverbindungselement 18 an einem Positionierelement 30 in Form eines Halteelements 31 werkzeuglos lösbar angeordnet ist. Das Positionierelement 30 ist in Fig. 8 vergrößert und zusätzlich auch im Querschnitt dargestellt. Das Positionierelement 30, das mit dem zweiten Schwenkteil 4 verbunden sein kann, erleichtert die exakte Positionierung des zweiten Kontaktverbindungselements 18 am zweiten Schwenkteil 4, um durch Überführen des zweiten Schwenkteils 4 in die Schließstellung an das erste Kontaktverbindungselement 17 herangeführt werden zu können, sodass der zumindest eine Magnet 19 die Kontaktverbindungselemente 17, 18 in die Kontaktstellung überführen kann. Das Positionierelement 30 weist eine im Wesentlichen rechteckige Auflagefläche 32 auf, an der Haltevorsprünge 33 vorgesehen sind, die vorzugsweise entlang des Umfangs des Positionierelements 30 angeordnet sind. Das Positionierelement 30 ist bevorzugt derart dimensioniert, dass, wenn das zweite Kontaktverbindungselement 18 in dem Positionierelement 30 aufgenommen ist, ein Spiel 34 zwischen dem zweiten Kontaktverbindungselement 18 und den Haltevorsprüngen 33 vorgesehen ist (siehe Fig. 10). An der Rückseite des Positionierelements 30 können sich ein oder mehrere Fixierstifte 51 zur Befestigung des Positionierelements 30 am zweiten Schwenkteil befinden.

Fig. 9 zeigt ein erstes 17 und ein zweites Kontaktverbindungselement 18 in Kontaktstellung in einer Querschnittsansicht. Es ist erkennbar, dass die Kontaktstifte 29 mithilfe der Federn 50 federvorgespannt sind, was Fehler bei der elektrischen Kontaktierung vermeidet. Erkennbar ist zudem, dass die Positionierstifte 26 zu einem vom zweiten Grundkörper 27 abstehenden Ende hin konisch zusammenlaufen, was das Eingreifen in die Aufnahmebuchsen 25 erleichtert.

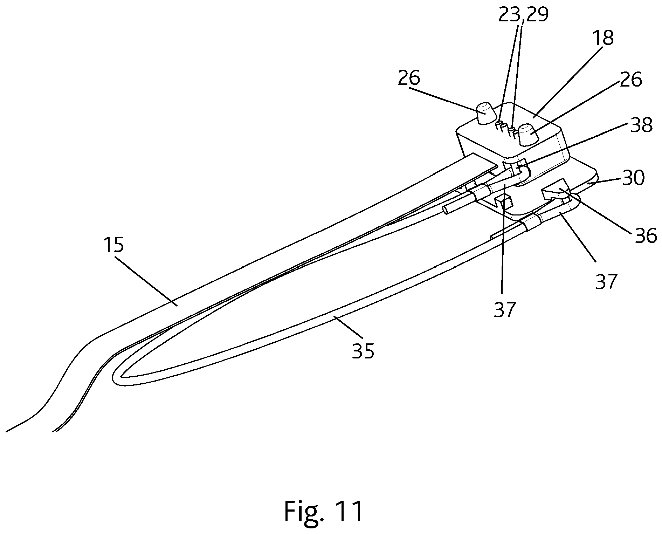

Fig. 11 zeigt eine Ausführungsform der Erfindung, bei der ein Sicherungselement 35 in Form einer Schnur vorgesehen ist. Das Sicherungselement 35 ist mit dem zweiten Schwenkteil 4 und dem zweiten Kontaktverbindungselement 18 verbunden. In der gezeigten Darstellung ist das Sicherungselement 35 mit einem Hakenelement 36 des Positionierelements 30 verbunden. Alternativ kann das Hakenelement 36 aber beispielsweise direkt am zweiten Schwenkteil befestigt sein. Am zweiten Kontaktverbindungselement 18 ist das Sicherungselement 35 mit einem Sicherungssteg 38 verbunden. Das Sicherungselement 35 bildet an beiden Enden zur Befestigung jeweils eine Schlaufe 37 aus. Das Sicherungselement 35 verhindert, dass bei der Demontage der Kabinenausstattungseinheit 1, insbesondere bei der Entnahme des zweiten Schwenkteils 4 vom ersten Schwenkteil 3, eine Zugkraft auf die Verbindungsleitung 15 ausgeübt wird. Wird das zweite Schwenkteil 4 entfernt, wird eine Zugkraft auf das zweite Kontaktverbindungselement 18 über das Sicherungselement 35 ausgeübt und so die Kontaktverbindungselemente in die Trennstellung überführt.

## Patentansprüche

1. Kabinenausstattungseinheit (1) für eine Passagierkabine eines Luftfahrzeugs, insbesondere Überkopf-Gepäckfach (2), aufweisend:
- ein erstes Schwenkteil (3), insbesondere ein erstes Gepäckfachteil,
- ein zweites Schwenkteil (4), das gegenüber dem ersten Schwenkteil (3) um eine Schwenkachse (5) zwischen einer Offenstellung und einer Schließstellung verschwenkbar ist, insbesondere ein zweites Gepäckfachteil, und
- ein elektrisches Element (13), das an dem zweiten Schwenkteil (4) angeordnet ist und über eine elektrische Verbindungsleitung (15) mit dem ersten Schwenkteil (3) verbindbar ist,
**dadurch gekennzeichnet, dass** das erste Schwenkteil (3) ein erstes Kontaktverbindungselement (17) und die elektrische Verbindungsleitung (15) ein zum ersten Kontaktverbindungselement (17) korrespondierendes zweites Kontaktverbindungselement (18) aufweist, wobei das erste (17) und/oder das zweite Kontaktverbindungselement (18) zumindest einen Magneten (19) aufweist und die Kontaktverbindungselemente (17, 18) von einer Trennstellung in eine Kontaktstellung überführbar sind, in der die Kontaktverbindungselemente (17, 18) elektrisch miteinander verbunden sind, wobei das zweite Kontaktverbindungselement (18) derart am zweiten Schwenkteil (4) anordenbar ist, dass durch Überführen des zweiten Schwenkteils (4) in die Schließstellung die Kontaktverbindungselemente (17, 18) in die Kontaktstellung gebracht und insbesondere durch eine Magnetkraft des zumindest einen Magneten (19) in der Kontaktstellung gehalten werden.

2. Kabinenausstattungseinheit (1) nach Anspruch 1, **dadurch gekennzeichnet, dass** die Kontaktstellung zwischen dem ersten (17) und dem zweiten Kontaktverbindungselement (18) bei Überführen des zweiten Schwenkteils (4) von der Schließstellung in die Offenstellung beibehalten wird.

3. Kabinenausstattungseinheit (1) nach Anspruch 1 oder 2, **dadurch gekennzeichnet, dass** ein Positionierelement (30), insbesondere ein Halteelement (31), für das zweite Kontaktverbindungselement (18) an dem zweiten Schwenkteil (4) angeordnet ist, mit dem das zweite Kontaktverbindungselement (18) beim Überführen des zweiten Schwenkteils (4) in die Schließstellung an das erste Kontaktverbindungselement (17) heranführbar ist.

4. Kabinenausstattungseinheit (1) nach Anspruch 3, **dadurch gekennzeichnet, dass** das Positionierelement (30) in einem Querschnitt der Kabinenausstattungseinheit (1) betrachtet in einem im Wesentlichen gleichen Abstand von der Schwenkachse (5) angeordnet ist wie das erste Kontaktverbindungselement (17).

5. Kabinenausstattungseinheit (1) nach einem der Ansprüche 1 bis 4, **dadurch gekennzeichnet, dass** das erste Schwenkteil (3) einen Aufnahmeraum (9) ausbildet, in welchen das zweite Schwenkteil (4) in der Schließstellung zumindest teilweise aufgenommen ist, wobei das erste Kontaktverbindungselement (17) an einer den Aufnahmeraum (9) ausbildenden Innenseite des ersten Schwenkteils (3) angeordnet ist.

6. Kabinenausstattungseinheit (1) nach Anspruch 3 oder 4 und 5, **dadurch gekennzeichnet, dass** das Positionierelement (30) an einer dem Aufnahmeraum (9) zugewandten Außenseite, insbesondere oberseitigen Außenseite, des zweiten Schwenkteils (4) angeordnet ist.

7. Kabinenausstattungseinheit (1) nach einem der Ansprüche 5 oder 6, **dadurch gekennzeichnet, dass** die Verbindungsleitung (15) zumindest teilweise in einem Teilbereich des Aufnahmeraums (9) angeordnet ist.

8. Kabinenausstattungseinheit (1) nach einem der Ansprüche 1 bis 7, **dadurch gekennzeichnet, dass** die Verbindungsleitung (15) ein Flachbandkabel, insbesondere ein zumindest vierpoliges Flachbandkabel, ist.

9. Kabinenausstattungseinheit nach einem der Ansprüche 1 bis 8, **dadurch gekennzeichnet, dass** das elektrische Element (13) ein Beleuchtungselement (14), insbesondere ein in einer Griffleiste des zweiten Schwenkteils (4) angeordnetes Beleuchtungselement (14), ist.

10. Kabinenausstattungseinheit nach einem der Ansprüche 1 bis 9, **dadurch gekennzeichnet, dass** das erste (17) und/oder das zweite Kontaktverbindungselement (18) zumindest einen federnden Kontaktstift (29) aufweist.

11. Kabinenausstattungseinheit (1) nach einem der Ansprüche 1 bis 10, **dadurch gekennzeichnet, dass** ein Sicherungselement (35), insbesondere ein Kabel, ein Draht oder eine Schnur, vorgesehen ist, das mit dem zweiten Kontaktverbindungselement (18) und dem zweiten Schwenkteil (4) verbunden ist.

12. Luftfahrzeug, insbesondere Flugzeug, mit in einer Passagierkabine und zumindest einer darin angeordneten Kabinenausstattungseinheit (1), **dadurch gekennzeichnet, dass** die Kabinenausstattungseinheit (1) nach einem der Ansprüche 1 bis 10 ausgebildet ist.

13. Verfahren zum Zusammensetzen einer Kabinenausstattungseinheit (1), vorzugsweise in einem Luftfahrzeug, insbesondere in einem Flugzeug, mit den nachfolgenden Schritten:
Bereitstellen einer Kabinenausstattungseinheit (1), das folgendes aufweist:
- ein erstes Schwenkteil (3), insbesondere ein erstes Gepäckfachteil, mit einem ersten Kontaktverbindungselement (17);
- ein zweites Schwenkteil (4), das gegenüber dem ersten Schwenkteil (3) um eine Schwenkachse (5) verschwenkbar ist, insbesondere ein zweites Gepäckfachteil;
- ein elektrisches Element (13), das an dem zweiten Schwenkteil (4) angeordnet ist und über eine elektrische Verbindungsleitung (15) mit dem ersten Schwenkteil (3) verbindbar ist, wobei die elektrische Verbindungsleitung (15) ein zum ersten Kontaktverbindungselement (17) korrespondierendes zweites Kontaktverbindungselement (18) aufweist und das zweite Kontaktverbindungselement (18) am zweiten Schwenkteil (4) lösbar angeordnet ist;
- zumindest einen Magneten (19) an dem ersten (17) und/oder zweiten Kontaktverbindungselement (18), wobei die Kontaktverbindungselemente (17, 18) von einer Trennstellung in eine Kontaktstellung überführbar sind, in der die Kontaktverbindungselemente (17, 18) elektrisch miteinander verbunden sind;
Überführen des zweiten Schwenkteils (4) in eine Schließstellung, sodass die Kontaktverbindungselemente (17, 18) in die Kontaktstellung gebracht und anschließend insbesondere durch eine Magnetkraft des zumindest einen Magneten (19) in der Kontaktstellung gehalten werden.

14. Verfahren nach Anspruch 13, **dadurch gekennzeichnet, dass** vor dem Überführen des zweiten Schwenkteils (4) in die Schließstellung das zweite Schwenkteil (4) mit dem ersten Schwenkteil (3) verbunden wird und das zweite Kontaktverbindungselement (18) an dem zweiten Schwenkteil (4) lösbar angeordnet wird.

## Claims

1. Cabin equipment unit (1) for a passenger cabin of an aircraft, in particular an overhead baggage compartment (2), comprising:
- a first pivoting part (3), in particular a first baggage compartment part,
- a second pivoting part (4), which is pivotable relative to the first pivoting part (3) about a pivot axis (5) between an open position and a closed position, in particular a second baggage compartment part, and
- an electric element (13) arranged on the second pivoting part (4) and connectable to the first pivoting part (3) via an electrical connection line (15),
**characterized in that** the first pivoting part (3) comprises a first contact connecting element (17) and the electrical connection line (15) comprises a second contact connecting element (18) corresponding to the first contact connecting element (17), wherein the first (17) and/or the second contact connecting element (18) comprises at least one magnet (19), and the contact connecting elements (17, 18) are transferrable from a separation position to a contact position in which the contact connecting elements (17, 18) are electrically connected to each other, wherein the second contact connecting element (18) is arrange-able on the second pivoting part (4) such that by moving the second pivoting part (4) into the closed position, the contact connecting elements (17, 18) are brought into the contact position and held in the contact position, in particular by a magnetic force of the at least one magnet (19).

2. Cabin equipment unit (1) according to Claim 1, **characterized in that** the contact position between the first (17) and the second contact connecting element (18) is maintained when the second pivoting part (4) is moved from the closed position to the open position.

3. Cabin equipment unit (1) according to Claim 1 or 2, **characterized in that** a positioning element (30), in particular a holding element (31), for the second contact connecting element (18) is arranged on the second pivoting part (4), by means of which the second contact connecting element (18) can be brought toward the first contact connecting element (17) when the second pivoting part (4) is moved into the closed position.

4. Cabin equipment unit (1) according to Claim 3, **characterized in that** the positioning element (30), viewed in a cross-section of the cabin equipment unit (1), is arranged at essentially the same distance from the pivot axis (5) as the first contact connecting element (17).

5. Cabin equipment unit (1) according to one of Claims 1 to 4, **characterized in that** the first pivoting part (3) forms a receiving space (9) into which the second pivoting part (4) is at least partially inserted in the closed position, wherein the first contact connecting element (17) is arranged on an inside of the first pivoting part (3) forming the receiving space (9).

6. Cabin equipment unit (1) according to Claim 3 or 4 and 5, **characterized in that** the positioning element (30) is arranged on an outside, in particular an upper outside, of the second pivoting part (4) facing the receiving space (9).

7. Cabin equipment unit (1) according to one of Claims 5 or 6, **characterized in that** the connection line (15) is at least partially arranged in a portion of the receiving space (9).

8. Cabin equipment unit (1) according to one of Claims 1 to 7, **characterized in that** the connection line (15) is a flat ribbon cable, in particular flat ribbon cable with at least four poles.

9. Cabin equipment unit according to one of Claims 1 to 8, **characterized in that** the electric element (13) is a lighting element (14), in particular a lighting element (14) arranged in a handle strip of the second pivoting part (4).

10. Cabin equipment unit according to one of Claims 1 to 9, **characterized in that** the first (17) and/or the second contact connecting element (18) comprises at least one spring-loaded contact pin (29).

11. Cabin equipment unit (1) according to one of Claims 1 to 10, **characterized in that** a securing element (35), in particular a cable, a wire, or a cord, is provided which is connected to the second contact connecting element (18) and to the second pivoting part (4).

12. Aircraft, in particular an airplane, with at least one cabin equipment unit (1) arranged in a passenger cabin, **characterized in that** the cabin equipment unit (1) is designed according to one of Claims 1 to 10.

13. Method for assembling a cabin equipment unit (1), preferably in an aircraft, in particular in an airplane, with the following steps:
Providing a cabin equipment unit (1), which comprises:
- a first pivoting part (3), in particular a first baggage compartment part, with a first contact connecting element (17);
- a second pivoting part (4), which is pivotable relative to the first pivoting part (3) about a pivot axis (5), in particular a second baggage compartment part;
- an electric element (13) arranged on the second pivoting part (4) and connectable to the first pivoting part (3) via an electrical connection line (15), wherein the electrical connection line (15) comprises a second contact connecting element (18) corresponding to the first contact connecting element (17), and the second contact connecting element (18) is arranged detachably on the second pivoting part (4);
- at least one magnet (19) on the first (17) and/or second contact connecting element (18), wherein the contact connecting elements (17, 18) can be transferred from a separation position to a contact position in which the contact connecting elements (17, 18) are electrically connected to each other;
Moving the second pivoting part (4) into a closed position, so that the contact connecting elements (17, 18) are brought into the contact position and subsequently held in the contact position, in particular by a magnetic force of the at least one magnet (19).

14. Method according to Claim 13, **characterized in that** before moving the second pivoting part (4) into the closed position, the second pivoting part (4) is connected to the first pivoting part (3) and the second contact connecting element (18) is arranged detachably on the second pivoting part (4).

## Revendications

1. Unité d'équipement de cabine (1) pour une cabine passagers d'un aéronef, en particulier un compartiment à bagages supérieur (2), comprenant :
- une première partie pivotante (3), en particulier une première partie de compartiment à bagages,
- une seconde partie pivotante (4), qui peut pivoter par rapport à la première partie pivotante (3) autour d'un axe de pivotement (5) entre une position ouverte et une position fermée, en particulier une seconde partie de compartiment à bagages, et
- un élément électrique (13), qui est disposé sur la seconde partie pivotante (4) et peut être relié à la première partie pivotante (3) via une ligne de connexion électrique (15),
**caractérisée en ce que** la première partie pivotante (3) comprend un premier élément de connexion de contact (17) et la ligne de connexion électrique (15) comprend un second élément de connexion de contact (18) correspondant au premier élément de connexion de contact (17), le premier (17) et/ou le second élément de connexion de contact (18) comprend au moins un aimant (19) et les éléments de connexion de contact (17, 18) pouvant être amenés d'une position séparée à une position de contact dans laquelle les éléments de connexion de contact (17, 18) sont électriquement connectés l'un à l'autre, le second élément de connexion de contact (18) pouvant être disposé sur la seconde partie pivotante (4) de telle sorte qu'en amenant la seconde partie pivotante (4) en position fermée, les éléments de connexion de contact (17, 18) sont mis en position de contact et sont notamment maintenus dans la position de contact par une force magnétique du au moins un aimant (19).

2. Unité d'équipement de cabine (1) selon la revendication 1, **caractérisée en ce que** la position de contact entre le premier (17) et le second élément de connexion de contact (18) est maintenue lors du passage de la seconde partie pivotante (4) de la position fermée à la position ouverte.

3. Unité d'équipement de cabine (1) selon la revendication 1 ou 2, **caractérisée en ce qu'**un élément de positionnement (30), en particulier un élément de retenue (31), pour le second élément de connexion de contact (18) est disposé sur la seconde partie pivotante (4), avec lequel le second élément de connexion de contact (18) peut être amené vers le premier élément de connexion de contact (17) lors du passage de la seconde partie pivotante (4) en position fermée.

4. Unité d'équipement de cabine (1) selon la revendication 3, **caractérisée en ce que** l'élément de positionnement (30), vu dans une section transversale de l'unité d'équipement de cabine (1), est disposé à une distance sensiblement égale de l'axe de pivotement (5) que le premier élément de connexion de contact (17).

5. Unité d'équipement de cabine (1) selon l'une des revendications 1 à 4, **caractérisée en ce que** la première partie pivotante (3) forme un espace de réception (9), dans lequel la seconde partie pivotante (4) est au moins partiellement reçue en position fermée, le premier élément de connexion de contact (17) étant disposé sur une face intérieure de la première partie pivotante (3) formant l'espace de réception (9).

6. Unité d'équipement de cabine (1) selon la revendication 3 ou 4 et 5, **caractérisée en ce que** l'élément de positionnement (30) est disposé sur une face extérieure, en particulier une face extérieure supérieure, de la seconde partie pivotante (4) tournée vers l'espace de réception (9).

7. Unité d'équipement de cabine (1) selon l'une des revendications 5 ou 6, **caractérisée en ce que** la ligne de connexion (15) est disposée au moins partiellement dans une partie de l'espace de réception (9).

8. Unité d'équipement de cabine (1) selon l'une des revendications 1 à 7, **caractérisée en ce que** la ligne de connexion (15) est un câble plat, en particulier un câble plat à au moins quatre conducteurs.

9. Unité d'équipement de cabine selon l'une des revendications 1 à 8, **caractérisée en ce que** l'élément électrique (13) est un élément d'éclairage (14), en particulier un élément d'éclairage (14) disposé dans une barre de préhension de la seconde partie pivotante (4).

10. Unité d'équipement de cabine selon l'une des revendications 1 à 9, **caractérisée en ce que** le premier (17) et/ou le second élément de connexion de contact (18) comprend au moins une broche de contact à ressort (29).

11. Unité d'équipement de cabine (1) selon l'une des revendications 1 à 10, **caractérisée en ce qu'**un élément de sécurité (35), en particulier un câble, un fil ou une corde, est prévu, qui est relié au second élément de connexion de contact (18) et à la seconde partie pivotante (4).

12. Aéronef, en particulier avion, comprenant une cabine passagers et au moins une unité d'équipement de cabine (1) disposée à l'intérieur, **caractérisé en ce que** l'unité d'équipement de cabine (1) est conçue selon l'une des revendications 1 à 10.

13. Procédé d'assemblage d'une unité d'équipement de cabine (1), de préférence dans un aéronef, en particulier dans un avion, comprenant les étapes suivantes :
Fourniture d'une unité d'équipement de cabine (1) comprenant:
- une première partie pivotante (3), en particulier une première partie de compartiment à bagages, avec un premier élément de connexion de contact (17) ;
- une seconde partie pivotante (4), qui peut pivoter par rapport à la première partie pivotante (3) autour d'un axe de pivotement (5), en particulier une seconde partie de compartiment à bagages;
- un élément électrique (13), qui est disposé sur la seconde partie pivotante (4) et peut être relié à la première partie pivotante (3) au moyen d'une ligne de connexion électrique (15), la ligne de connexion électrique (15) comprenant un second élément de connexion de contact (18) correspondant au premier élément de connexion de contact (17) et le second élément de connexion de contact (18) étant disposé de manière amovible sur la seconde partie pivotante (4) ;
- au moins un aimant (19) sur le premier (17) et/ou le second élément de connexion de contact (18), les éléments de connexion de contact (17, 18) pouvant être amenés d'une position séparée à une position de contact dans laquelle les éléments de connexion de contact (17, 18) sont électriquement connectés l'un à l'autre;
Amener la seconde partie pivotante (4) en position fermée, de sorte que les éléments de connexion de contact (17, 18) sont mis en position de contact et sont ensuite notamment maintenus dans la position de contact par une force magnétique du au moins un aimant (19).

14. Procédé selon la revendication 13, **caractérisé en ce qu'**avant d'amener la seconde partie pivotante (4) en position fermée, la seconde partie pivotante (4) est reliée à la première partie pivotante (3) et le second élément de connexion de contact (18) est disposé de manière amovible sur la seconde partie pivotante (4).
